# EUROPÄISCHE PATENTSCHRIFT

(11) **EP 2 320 508 B1**
(45) Veröffentlichungstag und Bekanntmachung des Hinweises auf die Patenterteilung: **05.09.2012**
(21) Anmeldenummer: 09013683.9
(22) Anmeldetag: 30.10.2009
(51) Int. Cl.: H01M 10/04, H01M 10/058

(54) **Fertigungsanlage für eine Akkuflachzelle und Verfahren zur Herstellung einer Akkuflachzelle**
Production assembly for a flat battery cell and method for producing a flat battery cell
Installation de finissage pour une cellule plate de batterie et procédé de fabrication d'une cellule plate de batterie

(43) Veröffentlichungstag der Anmeldung: 11.05.2011
(73) Patentinhaber: ads-tec GmbH, 70771 Leinfelden-Echterdingen (DE)
(72) Erfinder:
(74) Vertreter: Wasmuth, Rolf

(56) Entgegenhaltungen:
- WO-A-2008/150070
- DE-U1-202009 009 178
- US-A1- 2002 007 552
- US-A1- 2006 137 175

## Beschreibung

Die Erfindung betrifft eine Fertigungsanlage für eine Akkuflachzelle und ein Verfahren zur Herstellung einer Akkuflachzelle.

Aus der DE 20 2009 009 178 U1 ist eine Fertigungsanlage für eine Akkuflachzelle bekannt, bei der die Zuschnitte von Anodenmaterial, Kathodenmaterial, und Separatormaterial von Bandmaterial ausgeschnitten werden. Der Transport zu dem Stapel erfolgt über separate Einleger, die zugleich als Schnittstempel dienen. Dabei sind ein Einleger für Anodenmaterial, ein Einleger für Kathodenmaterial und ein Einleger für Separatormaterial vorgesehen.

US 2002/0007552 A1 offenbart ebenfalls eine Fertigungsanlage nach dem Stand der Technik.

Der Erfindung liegt die Aufgabe zugrunde, eine Fertigungsanlage für eine Akkuflachzelle und ein Verfahren zur Herstellung einer Akkuflachzelle anzugeben, mit dem auf einfache Weise ein schnelles Herstellen des Stapels möglich ist. Diese Aufgabe wird durch eine Fertigungsanlage mit den Merkt malen des Anspruchs 1 und durch ein Verfahren zur Herstellung einer Akkuflachzelle mit den Merkmalen des Anspruchs 14 gelöst.

Dadurch, dass die Fertigungsanlage zwei Schneideinrichtungen für Separatormaterial besitzt, begrenzt das Zuschneiden des Separatormaterials nicht die Geschwindigkeit der Herstellung des Stapels. Gleichzeitig muss das Bandmaterial für Separatormaterial nicht doppelt so häufig gewechselt werden wie das Bandmaterial für Anodenmaterial und das Bandmaterial für Kathodenmaterial. Es ergeben sich für alle Materialien etwa gleiche Wechselintervalle bei etwa gleicher Länge des aufgewickelten Bandmaterials.

Vorteilhaft besitzt die Fertigungsanlage eine Transporteinrichtung zum Transport von Anodenzuschnitten, Kathodenzuschnitten und Separatorzuschnitten. Die Transporteinrichtung besitzt dabei insbesondere eine Transportwalze für Kathodenzuschnitte, eine Transportwalze für Anodenzuschnitte und eine Transportwalze für Separatorzuschnitte. Dadurch wird ein sortenreines Transportieren der Zuschnitte ermöglicht. Die eine Transportwalze für Separatorzuschnitte kann sowohl Separatorzuschnitte der ersten Schneidstation als auch Separatorzuschnitte der zweiten Schneidstation transportieren, so dass der Aufbau der Fertigungsanlage vereinfacht wird.

Es ist vorgesehen, dass die Transportwalzen an einem gemeinsamen Schlitten angeordnet sind, der sich zwischen den beiden Schneidstationen und dem Stapel bewegt. Dadurch wird nur ein Antrieb für den. Transport aller drei Transportwalzen benötigt. Vorteilhaft fährt die Transporteinrichtung die beiden Schneidstationen abwechselnd an, wobei der Stapel zwischen den beiden Schneidstationen angeordnet ist. Insbesondere legt die Transporteinrichtung nach jeder Aufnahme von Zuschnitten an einer Schneidstation die bei der Schneidstation aufgenommenen Zuschnitte auf dem Stapel ab. Dadurch kann das Transportieren und Ablegen der Zuschnitte sehr schnell erfolgen. Die Tranaporteinrichtung transportiert dabei immer zwei Zuschnitte gleichzeitig, nämlich einen Kathodenzuschnitt und einen Separatorzuschuitt oder einen Anodenzuschnitt und einen Separatorzuschnitt, die dann direkt nacheinander auf dem Stapel abgelegt werden.

Es ist vorgesehen, dass die Schneideinrichtung das über eine Schneidwalze geführte Bandmaterial auf der Schneidwalze schneidet. Dadurch ist es möglich, das Bandmaterial und die Zuschnitte ausschließlich über Walzen zu transportieren. Ein Ablegen der zuschnitte auf eine flache Fläche erfolgt erst auf dem Stapel. Insbesondere umfasst die Schneideinrichtung einen Laser. Es kann jedoch auch vorgesehen sein, dass ein Teil der Schnitte oder alle Schnitte über Messer oder dgl. ausgeführt werden. Es kann jedoch auch vorgesehen sein, dass die Schneideinrichtung eine Stanzvorrichtung umfasst, die den Zuschnitt aus dem Bandmaterial ausstanzt. Das Stanzen erfolgt dabei insbesondere in flachem Zustand, also nicht auf der Schneidwalze.

Um sicherzustellen, dass die aufgestapelten Zuschnitte fehlerfrei sind, ist vorgesehen, dass der Schneideinrichtung eine Erkennungseinrichtung zugeordnet ist, die markierte Materialfehlcr erkennt. Üblicherweise sind die Materialfehler bereits auf dem Bandmaterial markiert. Die Schneideinrichtung ist dabei so gesteuert, dass Zuschnitte mit erkannten Materialfehlern nicht auf dem Stapel abgelegt werden. Diese Zuschnitte mit erkannten Materialfehlern werden verworfen.

Um eine gute Funktion und lange Lebensdauer der Akkuflachzelle zu erreichen, müssen die Zuschnitte sehr trocken sein. Um diese geforderte Trockenheit zu erreichen, kann es vorgesehen sein, dass vor mindestens einer Schneideinrichtung und dem Stapel mindestens eine Trocknungseinrichtung angeordnet ist. In der Trocknungseinrichtung kann das Separatormaterial, Anodenmaterial und Kathodenmaterial vorteilhaft als Bandmaterial getrocknet und beispielsweise schlangenlinienförmig geführt werden, so dass sich eine ausreichende Verweildauer in der Trocknungseinrichtung ergibt. Die Zuschnitte können dabei auf einer Walze angeordnet oder in flachem Zustand getrocknet werden.

Um die geforderte Trockenheit zu erreichen, ist außerdem vorgesehen, dass die Fertigungsanlage so gekapselt ist, dass sich sehr trockene Bereiche ergeben. Vorteilhaft ist nicht die gesamte Fertigungsanlage gekapselt, sondern die Fertigungsanlage weist Bereiche unterschiedlicher Trockenheit auf. Der Stapel ist dabei insbesondere in dem Bereich der höchsten Trockenheit angeordnet. Es ist vorgesehen, dass die Schneideinrichtung in einem zweiten Bereich mit mittlerer Trockenheit angeordnet ist und die Rollen mit Bandmaterial in einem dritten Bereich mit geringerer Trockenheit. Die Luftfeuchtigkeit in dem dritten Bereich ist dabei immer noch deutlich geringer als die übliche Luftfeuchtigkeit der Umgebungsluft. Dadurch, dass nur geringe Bereiche der Fertigungsanlage gekapselt ausgeführt sind, ist der Aufwand für die Erzielung der geforderten sehr geringen Luftfeuchtigkeit gegenüber der Kapselung der gesamten Fertigungsanlage deutlich verringert.

Ein Verfahren zur Herstellung einer Akkuflachzelle aus einem Stapel wechselnd aufeinander geschichteter Zuschnitte von Anodenmaterial und Kathodenmaterial, die durch zwischengelegte Zuschnitte eines Separatormaterials elektrisch voneinander getrennt sind, wobei die zuschnitte aus Bandmaterial ausgeschnitten werden, sieht vor, dass jeder Anodenzuschnitt gleichzeitig mit einem Separatorzuschnitt ausgeschnitten wird, und dass jeder Kathodenzuschnitt gleichzeitig mit einem Separatorzuschnitt ausgeschnitten wird.

Durch das gleichzeitige Ausschneiden von Anodenzuschnitt und Separatorzuschnitt oder Kathodenzuschnitt und Separatorzuschnitt kann die Taktzeit der Fertigungsanlage sehr gering sein. Dadurch, dass der Anodenzuschnitt oder Kathodenzuschnitt immer gleichzeitig mit dem zugeordneten Separatorzuschnitt ausgeschnitten wird, ist ein sehr schnelles Aufstapeln der Zuschnitte möglich.

Vorteilhaft werden die zusammen ausgeschnittenen Zuschnitte auch zusammen zu dem Stapel transportiert. Dadurch wird die Anzahl der Transportschritte deutlich verringert. Es ist vorgesehen, dass der Anodenzuschnitt oder Kathodenzuschnitt ausgeschnitten wird, während der Kathodenzuschnitt oder Anodenzuschnitt zu dem Stapel transportiert wird. Das Ausschneiden und Transportieren erfolgt dabei jeweils zusammen mit dem zugeordneten Separatorzuschnitt. Durch das gleichzeitige Zuschneiden und Transportieren wird die Taktzeit ebenfalls verringert. Auch das Ablegen der Zuschnitte erfolgt gleichzeitig mit dem Zuschneiden der folgenden beiden Zuschnitte. Dadurch steht für das Zuschneiden der Konturen, insbesondere von Anodenzuschnitt und Kathodenzuschnitt, die abgerundete Ränder und dgl. aufweisen können, ausreichende Zeit zur Verfügung. Dadurch kann der Stapel sehr schnell gebildet werden.

Ausführungsbeispiele der Erfindung werden im Folgenden anhand der Zeichnung erläutert. Es zeigen:
- Fig. 1: eine schematische Darstellung einer Akku- flachzelle,
- Fig. 2: einen schematischen Schnitt durch die Akku- flachzelle aus Fig. 1 entlang der Linie II-II in Fig. 1,
- Fig. 3: eine Seitenansicht einer Fertigungsanlage für eine Akkuflachzelle,
- Fig. 4: eine perspektivische Darstellung der Fertigungsanlage aus Fig. 3,
- Fig. 5: eine perspektivische Darstellung der Rück- seite der Fertigungsanlage aus Fig. 4,
- Fig. 6 bis 8: perspektivische Darstellungen der zweiten Schneidstation der Fertigungsanlage bei der Übergabe der Zuschnitte auf die Transport- walzen,
- Fig. 9 und 10: ausschnittsweise Seitenansichten auf die Transporteinrichtung,
- Fig. 11: eine Draufsicht auf den Stapel in Richtung des Pfeiles XI in Fig. 8,
- Fig. 12 und 13: Seitenansichten des Stapels beim Ablegen von Kathodenzuschnitt und Separator- zuschnitt,
- Fig. 14: eine Seitenansicht der Fertigungsanlage zu Beginn der Übergabe von Anodenzuschnitt und Separatorzuschnitt an die Transport- einrichtung,
- Fig. 15 und 16: perspektivische Darstellungen einer Schneidwalze,
- Fig. 17: eine perspektivische Darstellung der Steuerungsplatte der Schneidwalze,
- Fig. 18: eine Seitenansicht auf die transparent ge- zeichnete Schneidwalze mit der Steuerungs- platte in Richtung des Pfeils XVIII aus Fig. 15,
- Fig. 19: eine Seitenansicht eines Ausführungs- beispiels einer Fertigungsanlage für eine Akkuflachzelle,
- Fig. 20: einen Ablaufplan zum Ablauf eines Ver- fahrens zur Herstellung einer Akkuflach- zelle.

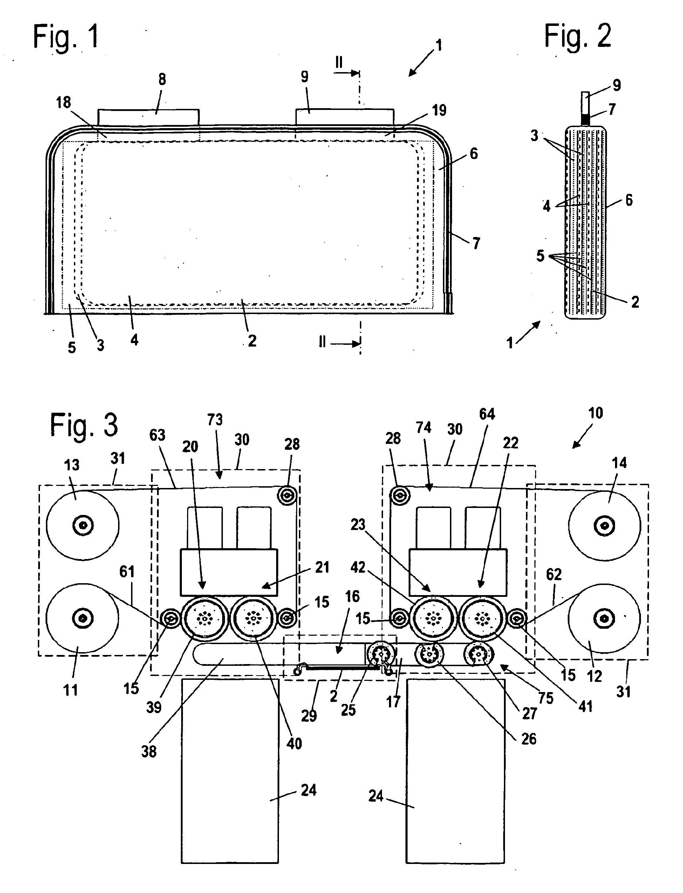

In den Figuren 1 und 2 ist schematisch eine Akkuflachzelle 1 gezeigt. Die Akkuflachzelle 1 besteht aus einem Stapel 2 von abwechselnd übereinander geschichteten Anodenzuschnitten 3 und Kathodenzuschnitten 4. Zwischen jedem Anodenzuschnitt 3 und Kathodenzuschnitt 4 ist ein Separatorzuschnitt 5 angeordnet.

Die Anodenzuschnitte 3 besitzen jeweils eine Kontaktlasche 18 und die Kathodenzuschnitte 4 eine Kontaktlasche 19. Alle Kontaktlaschen 18 und alle Kontaktlaschen 19 sind jeweils miteinander kontaktiert und mit einem Anodenanschluss 8 bzw. einem Kathodenanschluss 9 verbunden. Der Stapel 2 ist von einem Hüllmaterial 6 umgeben, das isolierend ausgebildet ist und das taschenartig um den Stapel 2 gelegt und an drei Seiten mit einer Siegelnaht 7 dichtend verschlossen ist. Wie Fig. 1 schematisch zeigt, können die Anodenzuschnitte 3, die Kathodenzuschnitte 4 und die Separatorzuschnitte 5 geringfügig voneinander abweichende Größen besitzen. Alle Zuschnitte 3, 4, 5 sind jedoch im Wesentlichen rechteckig, wobei die Kathodenzuschnitte 4 und die Anodenzuschnitte 3 im Ausführungsbeispiel abgerundete Kanten aufweisen.

Die Anodenzuschnitte 3 und Kathodenzuschnitte 4 sind aus beschichteten Metall ausgebildet und besitzen eine Dicke von wenigen Zehntel Millimetern. Diese Separatorzuschnitte 5 sind aus elektrisch isolierendem Material und können eine Dicke von deutlich unter einem Zehntel Millimeter besitzen. Bei der Herstellung der Akkuflachzelle muss darauf geachtet werden, dass die Zuschnitte 3, 4, 5 positionsgenau und faltenfrei auf dem Stapel 2 abgelegt werden. Außerdem ist eine schnelle Ablage wünschenswert. Bei nicht positionagenauer Ablage kann es zu Kurzschlüssen innerhalb der Akkuflachzelle 1 kommen.

Fig. 3 zeigt eine Fertigungsanlage 10 für die Akkuflachzelle 1. Der Fertigungsanlage 10 wird Anodenmaterial 61 von einer Materialspule 11 zugeführt, Kathodenmaterial 62 von einer Materialspule 12 und Separatormaterial 63, 64 von Materialspulen 13 und 14.

Die Fertigungsanlage 10 besitzt eine erste Schneidstation 73, die eine Schneideinrichtung 20 für das Anodenmaterial 61 und eine Schneideinrichtung 21 für das Separatormaterial 63 umfasst. Die Fertigungsanlage 10 besitzt eine zweite Schneidstation 74 mit einer Schneideinrichtung 22 für Kathodenmaterial 62 und einer Schneideinrichtung 23 für Separatormaterial 64. Die Fertigungsanlage umfasst demnach jeweils eine Schneideinrichtung 20, 22 für Anodenmaterial 61 bzw. Kathodenmaterial 62 sowie zwei Schneideinrichtungen 21, 23 für Separatormaterial 63, 64. Jede Schneideinrichtung 21, 23 für Separatormaterial 63, 64 ist einer Schneideinrichtung 20, 22 für Anodenmaterial 61 bzw. Kathodenmaterial 62 zugeordnet. Die beiden Schneidstationen 73, 74 sind spiegelsymmetrisch zueinander angeordnet und aufgebaut. Jeder Schneideinrichtung 20, 21, 22, 23 ist eine Zuführwalze 15 zugeordnet, die das Bandmaterial einer Schneidwalze 39, 40, 41, 42 zuführt. Für das Separatormaterial 63, 64 ist außerdem jeweils eine Umlenkwalze 28 vorgesehen, da das Separatormaterial 63, 64 über die Schneideinrichtungen 20, 21, 22, 23 geführt ist.

Zwischen den Schneidstationen 73 und 74 ist eine Stapelstation 16 vorgesehen, in der ein Stapel 2 aus übereinander geschichteten Zuschnitten 3, 4, 5 angeordnet ist. Auf dem Stapel 2 werden nacheinander und fortlaufend ein Zuschnitt 5 von Separatormaterial. 63, ein Zuschnitt 3 von Anodenmaterial 61, ein Zuschnitt 5 von Separatormaterial 64 und ein Zuschnitt 4 von Kathodenmaterial 62 abgelegt, bis die gewünschte Höhe des Stapels 2 erreicht ist. Die letzte Lage bildet ein Zuschnitt 5 von Separatormaterial 63, 64.

Zur Ablage der Zuschnitte 3, 4, 5 besitzt die Fertigungsanlage 10 eine Transporteinrichtung 75, die die geschnittenen Zuschnitte 3, 4, 5 von den Schneidstationen 73 und 74 zum Stapel 2 transportiert. Dabei fährt die Transporteinrichtung 75 abwechselnd die erste Schneidstation 73, die Stapelstation 16, die zweite Schneideinrichtung 74 und die Stapelstation 16 an. Dabei werden jeweils gleichzeitig ein Separatorzuschnitt 5 3 und ein Anodenzuschnitt 3 von der Schneidstation 73 aufgenommen und nacheinander auf dem Stapel 2 abgelegt und anschließend ein Separatorzuschnitt 5 und ein Kathodenzuschnitt 4 von der Schneidstation 74 aufgenommen und auf dem Stapel 2 abgelegt. Bei jeder Bewegung der Transporteinrichtung 75 von einer Schneidstation 73, 74 zum Stapel 2 werden demnach zwei Zuschnitte 3, 4, 5 transportiert und abgelegt. Während die Zuschnitte von der ersten Schneidstation 73 aufgenommen, zum Stapel 2 transportiert und auf diesem abgelegt werden, werden bereits die nächsten Zuschnitte 4, 5 bei der zweiten schneidstation 74 geschnitten. Diese werden anschließend von der Transporteinrichtung 75 aufgenommen, zum Stapel 2 transportiert und auf dem Stapel 2 abgelegt.

Die Transporteinrichtung 75 besitzt einen Schlitten 17, an dem drei Transportwalzen 25, 26, 27 angeordnet sind. Dabei ist die mittige Transportwalze 26 eine Transportwalze für Separatorzuschnitte 5. Die linke, der ersten Schneidstation 73 zugewandte Transportwalze 25 ist eine Transportwalze für Anodenzuschnitte 3 und die in den Figuren rechts dargestellte Transportwalze 27, die der zweiten Schneidstation 74 zugewandt angeordnet ist, ist eine Transportwalze für Kathodenzuschnitte 4. Die Materialien werden in der Fertigungsanlage 10 sortenrein gehandhabt. Jedes Bauteil kommt demnach nur mit einer Materialsorte in Berührung. Bei der Aufnahme und beim Ablegen von einem Kathodenzuschnitt 4 und einem Separatorzuschnitt 5 bleibt die Transportwalze 25 für Anodenzuschnitte 3 leer. Bei der Bewegung in Gegenrichtung, also wenn ein Anodenzuschnitt 3 und ein Separatorzuschnitt 5 von der ersten Schneidstation 73 aufgenommen werden, bleibt die Transportwalze 27 für Kathodenzuschnitte 4 leer.

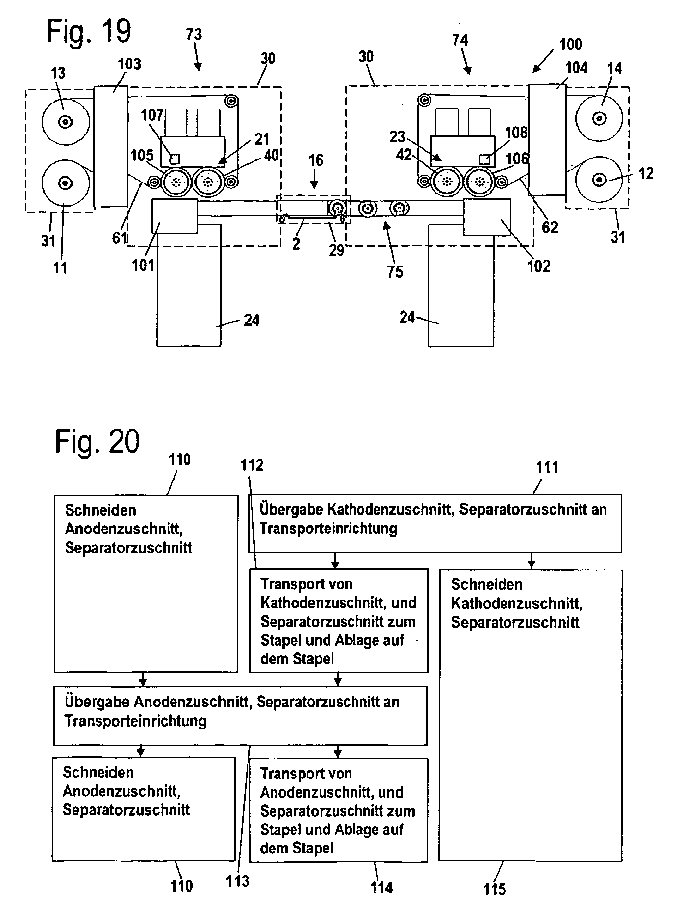

Der Ablauf des Verfahrens zur Herstellung der Akkuflachzelle 1 ist in Fig. 20 anhand der Verfahrenaschritte 110 bis 115 verdeutlicht. Gleichzeitig ablaufende Verfahrensschritte sind dabei nebeneinander angeordnet. Die in der Figur links angeordneten Verfahrensschritte laufen bei der ersten Schneidstation 73 ab, die in der Mitte angeordneten Verfahrensschritte bei der Transporteinrichtung 75 und die in der rechten Spalte angeordneten Verfahrensschritte bei der zweiten Schneidstation 74. Der gezeigte Ablauf wird zur Herstellung des Stapels 2 fortlaufend wiederholt.

Im Verfahrensschritt 110 werden ein Anodenzuschnitt 3 und ein Separatorzuschnitt 5 an der ersten Schneidstation 73 geschnitten. Gleichzeitig werden im Verfahrensschritt 111 ein Kathodenzuschnitt 4 und ein Separatorzuschnitt 5, die im vorangegangenen Verfahrensschritt 115 geschnitten wurden, von der zweiten Schneidstation 74 an die Transporteinrichtung 75 übergeben. Nach der Übergabe werden im darauf folgenden Verfahrensschritt 115 der nächste Kathodenzuschnitt 4 und Separatorzuschnitt 5 in der zweiten Schneidstation 74 geschnitten. Gleichzeitig werden im Verfahrensschritt 112 die von der Transporteinrichtung 75 aufgenommenen Zuschnitte 4, 5 zum Stapel 2 transportiert und auf diesem abgelegt. Anschließend fährt die Transporteinrichtung 75 weiter zur ersten Schneidstation 73, wo ein Anodenzuschnitt 3 und ein Separatorzuschnitt 5, die im Verfahrensschritt 110 geschnitten wurden, im Verfahrensachritt 113 an die Transporteinrichtung 75 übergeben werden. Anschließend werden im Verfahrensschritt 114 dieser Anodenzuschnitt 3 und Separatorzuschnitt 5 zum Stapel 2 transportiert und auf diesem abgelegt. In der ersten Schneidstation 73 wird im Verfahrensschritt 110 währenddessen bereits der nächste Anodenzuschnitt 3 und Separatorzuschnitt 5 geschnitten. In der zweiten Schneidstation 74 können ein Kathodenzuschnitt 4 und ein Separatorzuschnitt 5 noch geschnitten werden, bis die Transporteinrichtung 75 wieder zur zweiten Schneidstation 74 gefahren ist.

Dadurch, dass das Schneiden der zuschnitte parallel zum Transport und dem Ablegen der vorangegangenen Zuschnitte erfolgt, ergeben sich kurze Taktzeiten. Dadurch, dass jede Schneidstation 73, 74 eine Schneideinrichtung 21, 23 für Separatormaterial 63, 64 besitzt, und die Anodenzuschnitte 3 und Kathodenzuschnitte 4 jeweils gleichzeitig mit dem zugeordneten Separatorzuschnitt 5 geschnitten, transportiert und nacheinander abgelegt werden, ergeben sich sehr hohe Taktzeiten. Außerdem kann erreicht werden, dass die Materialapulen 11 bis 14 bei etwa gleicher Länge etwa gleichzeitig gewechselt werden müssen und nicht ein doppelt so häufiges Wechseln der Soparatorspulen 13, 14 notwendig wird, da etwa doppelt so viel Separatormaterial in den Stapel 2 geschichtet wird.

Der Stapel 2 darf für eine gute Funktion und hohe Lebensdauer der Akkuflachzelle 1 nur eine sehr geringe Feuchtigkeit besitzen. Deshalb muss die Fertigungsanlage 10 in einem vergleichsweise trockenen Raum arbeiten. Um den trocken zu haltenden Bereich möglichst klein zu halten, ist vorgesehen, dass einzelne Bereiche der Fertigungsanlage 10 gekapselt sind, wobei hier unterschiedliche Trocknungsstufen vorgesehen sein können. Der Stapel 2 befindet sich vorteilhaft in dem in Fig. 3 schematisch gezeigten ersten Bereich 29, der den Bereich der Fertigungsanlage 10 mit der geringsten Luftfeuchtigkeit bezeichnet. Die Schneidstationen 73 und 74 sind vorteilhaft jeweils in einem zweiten Bereich 30 angeordnet, in dem die Luftfeuchtigkeit etwas höher sein darf als im ersten Bereich 29. Ein dritter gekapselter Bereich 31 umfasst die Materialspulen 11, 12, 13 und 14, die einzeln oder, wie in Fig. 3 schematisch gezeigt, jeweils zu zweit zusammen gekapselt sein können. An die Bereiche 31 können sich Einrichtungen zum automatisierten Wechseln der Materialspulen 11, 12, 13, 14 anschließen. Der Wechsel der Materialspulen 11 bis 14 kann jedoch auch manuell erfolgen. In dem dritten Bereich 31 ist die Luftfeuchtigkeit größer als in dem zweiten Bereich 30, jedoch noch deutlich geringer als in der Umgebungsluft.

Da zur Forderung des Bandmaterials bzw. der Zuschnitte 3, 4, 5 die Bereiche 29, 30 und 31 miteinander verbunden sein müssen, ist vorgesehen, dass die Bereiche 29, 30, 31 Überdruck gegenüber der Umgebung besitzen, so dass das Eindringen von feuchter Umgebungsluft verhindert wird. Dabei ist vorteilhaft der Überdruck im ersten Bereich 29 am größten und wird zu den Bereichen 30 und 31 hin geringer, so dass trockene Luft aus dem ersten Bereich 29 zunächst in den zweiten Bereich 30 und dann in den dritten Bereich 31 strömt, bevor sie in die Umgebung entweicht. Dadurch, dass nicht die gesamte Fertigungsanlage 10 gekapselt wird, sondern nur die einzelnen Bereiche 29, 30, 31, ergibt sich ein deutlich einfacherer Aufbau. Antriebe und Lager werden vorteilhaft soweit möglich außerhalb des gekapselten Bereichs angeordnet. Es kann vorteilhaft sein, weitere trockene Bereiche vorzusehen, die separat gekapselt sein können und weitere Trockenheitsgrade aufweisen können.

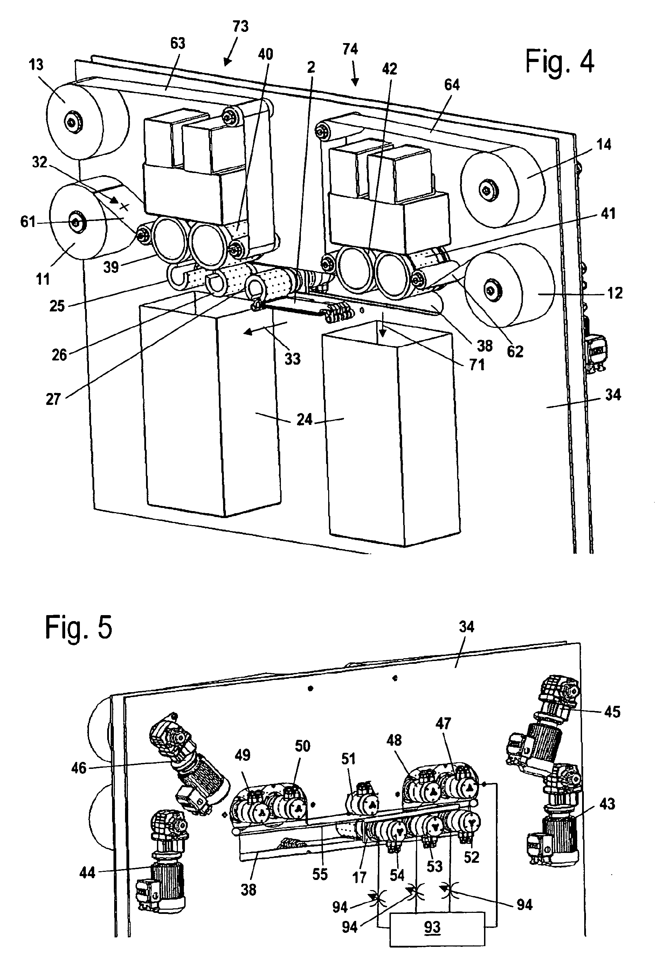

Wie Fig. 4 zeigt, besitzt die Fertigungsanlage 10 eine Tragwand 34, an der die einzelnen Komponenten angeordnet sind. Die Tragwand 34 besitzt einen Schlitz 38, in dessen Bereich der Schlitten 17 längsverschieblich zwischen den beiden Schneidstationen 73 und 74 und dem Stapel 2 geführt ist.

Wie Fig. 5 zeigt, sind die Antriebe 43 bis 46 der Materialspulen 11 bis 14, die Antriebe 47 bis 50 der Schneidwalzen 39 bis 42, der Antrieb 51 für den Schlitten 17, der im Ausführungsbeispiel einen Riemen 55 umfasst, und die Antriebe 52 bis 54 für die Transportwalzen 25 bis 27 auf der den Schneidstationen 73 und 74 und der Stapelstation 16 abgewandten Rückseite der Tragwand 34 angeordnet. Dadurch können die Antriebe auf einfache Weise außerhalb der gekapselten Bereiche 29 bis 31 angeordnet werden. Es ergibt sich außerdem ein einfacher Aufbau. Über die Antriebe 43 bis 50 und 52 bis 54 wird die Drehstellung der Walzen und Spulen gesteuert und über den Antrieb 51 die lineare Bewegung des Schlittens 17 zwischen den Schneidstationen 73, 74 und der Stapelstation 16.

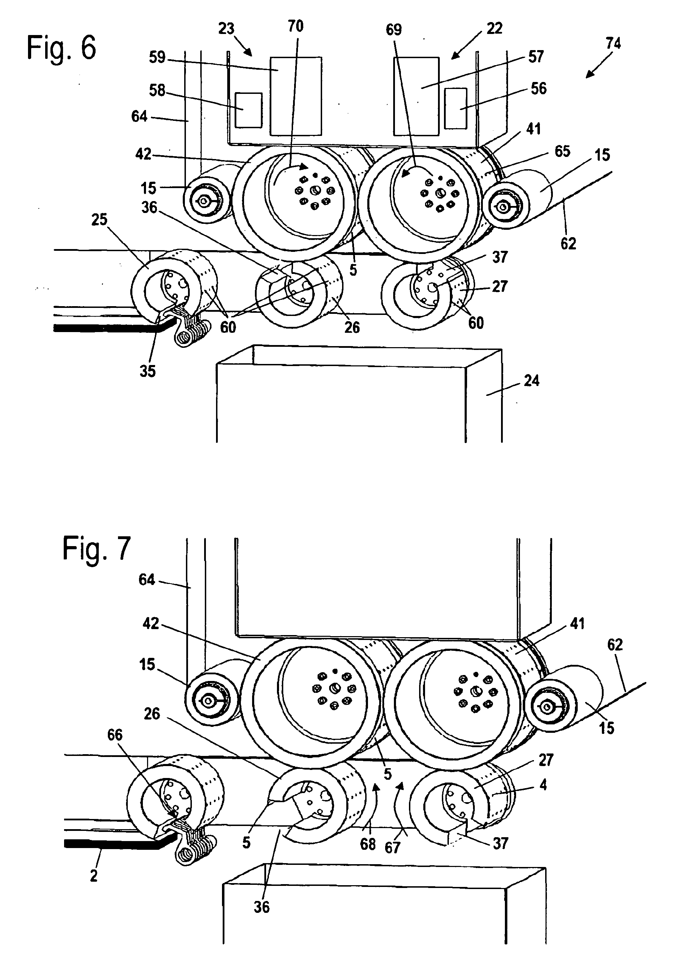

Das Bandmaterial 61, 62, 63, 64 kann Fehler enthalten, die üblicherweise bereits markiert sind. Zur Erkennung der entsprechenden Markierungen 32 ist jeder Schneideinrichtung 20, 21, 22, 23 eine Einrichtung zur optischen Erkennung zugeordnet. Dies können beispielsweise die in Fig. 6 schematisch gezeigten Kameras 56, 58 sein. Wird eine entsprechende Markierung 32 erkannt, so wird der Zuschnitt 3, 4, 5, der diese Markierung 32 umfasst, verworfen. Hierzu sind unterhalb der Schneidstationen 73 und 74 Auffangbehälter 24 angeordnet. Ein eine Markierung 32 enthaltender Zuschnitt 3, 4, 5 wird in Richtung des Pfeils 71 (Fig. 4) nach unten in den Auffangbehälter 24 fallen gelassen und nicht an die Transporteinrichtung 75 übergeben. Gleiches gilt für Randbereiche des Bandmaterials, das beim Zuschneiden entfernt wurde. Um den Stapel 2 nach Erreichen der gewünschten Höhe von der Fertigungsanlage 10 weg zu fördern, kann der Stapel 2 nach vorne in Richtung des Pfeils 33 gefördert werden. Dies ist ebenfalls in Fig. 4 schematisch angedeutet.

Um das Bandmaterial und die Zuschnitte 3, 4, 5 an den Schneidwalzen 39, 40, 41, 42 zu halten, sind Unterdrucköffnungen in der Umfangswand der Walzen 39 bis 42 vorgesehen. Diese Saugöffnungen 65 sind schematisch in Fig. 6 gezeigt, obwohl die Saugöffnungen 65 der Schneidwalze 41 in dieser Darstellung vom Kathodenmaterial 62 verdeckt sind.

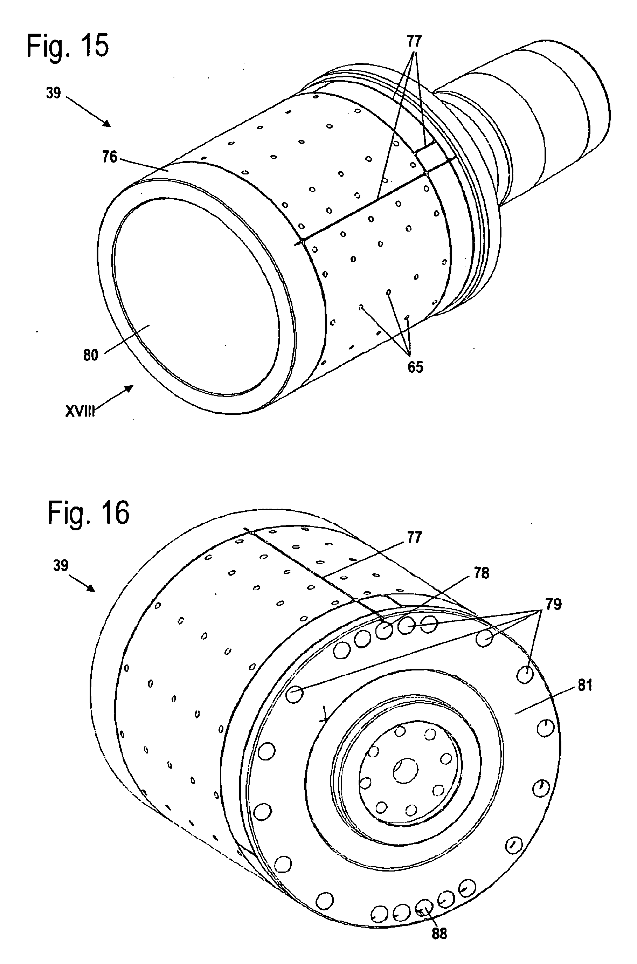

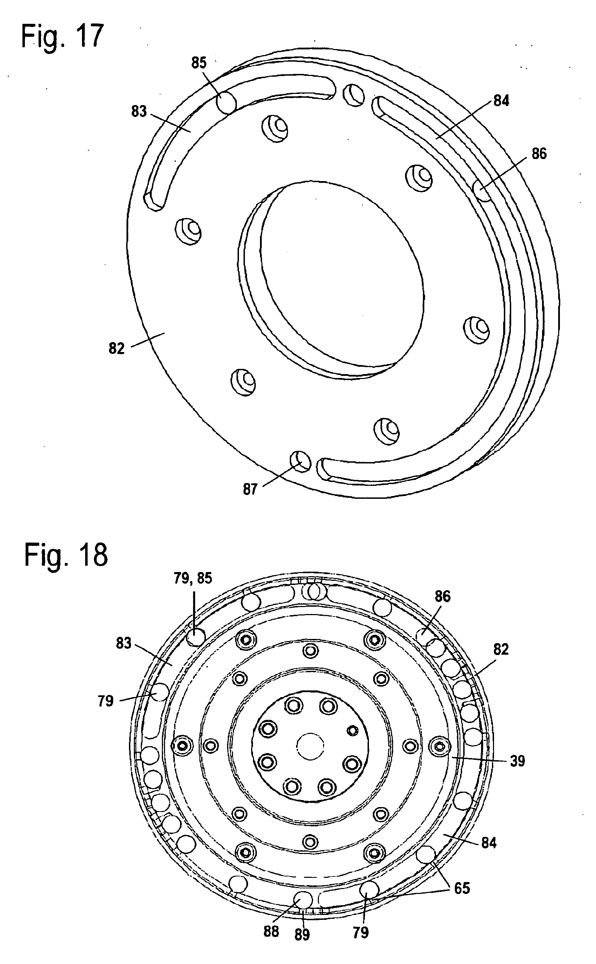

Die Figuren 15 bis 18 verdeutlichen die Fixierung des Bandmaterials 61 und des Anodenzuschnitts 3 am Beispiel der Schneidwalze 39 für Anodenmaterial 61. Die Schneidwalze 39 besitzt einen Hohlzylinder 80, der an der der Tragwand 34 zugewandten Seite durch eine Lagerplatte 81 verschlossen ist. Der Hohlzylinder 80 und die Lagerplatte 81 sind drehbar gelagert. An der Lagerplatte 81 ist eine Steuerungsplatte 82 angeordnet, die in Fig. 17 perspektivisch gezeigt ist und die ortsfest an der Tragwand 34 angeordnet ist. Bei einer Drehung des Hohlzylinders 80 und der Lagerplatte 81 dreht sich damit die Lagerplatte 81 relativ zur Steuerungsplatte 82.

Wie Fig. 15 zeigt, besitzt der Hohlzylinder 80 einen Rand 76. Der Umfang des Hohlzylinders 80 entspricht etwa dem Doppelten der Länge eines Anodenzuschnitts 3, so dass theoretisch zwei Anodenzuschnitte 3 am Umfang des Hohlzylinders 80 angeordnet sein könnten. Im Bereich der Umfangskante der Anodenzuschnitte 3 besitzt der Hohlzylinder 80 eine Vertiefung 77, die mit einer Öffnung 78 für die Schmutzabsaugung in Verbindung steht. Es ist vorgesehen, dass die Zuschnitte 3, 4, 5 auf den Schneidwalzen 39, 40, 41, 42 über Laser ausgeschnitten werden. Hierzu sind in Fig. 6 die Laser 57 und 59 schematisch gezeigt. Anstatt der Laser 57 und 59 können auch andere Schneidmittel vorgesehen sein, beispielsweise Messer oder dgl.. Auch eine Kombination mehrerer Schneidmittel kann vorteilhaft sein. Über die Laser 57 und 59 wird die Kontur der Anodenzuschnitte 3 und Kathodenzuschnitte 4 einschließlich der Kontaktlaschen 18, 19 ausgeschnitten. Während des Schneidvorgangs wird das Anodenmaterial 61 bzw. das Kathodenmaterial 62 über den an den Saugöffnungen 65 anliegenden Unterdruck gehalten. Die Saugöffnungen 65 münden in Saugkanäle 79, die in axialer Richtung der Schneidwalze 39 in der Wand des Hohlzylinders 80 verlaufen. Im Ausführungsbeispiel münden jeweils fünf nebeneinander angeordnete Saugöffnungen 65 in einen Saugkanal 79. Die Saugkanäle 79 münden gegenüberliegend zur Steuerungsplatte 82 an der Lagerplatte 81. Die Steuerungsplatte 82 besitzt zwei Nuten 83 und 84, in die die Saugkanäle 79 münden. An jeder Steuernut 83, 84 ist ein Sauganschluss 85, 86 angeordnet, so dass der Unterdruck in den beiden durch die Steuernuten 83, 84 definierten Bereichen separat gesteuert werden kann.

Im Bereich der Steuernut 83 liegt das Bandmaterial an der Schneidwalze 39 an und wird von der Kamera 58 überprüft und dem Laser 59 zugeführt. Im Bereich der Steuernut 84 ist der Zuschnitt 3 bereits geschnitten und wird über die Saugöffnungen 65 an der Schneidwalze 39 gehalten. An dem dem Laser 59 gegenüberliegenden, der Transportwalze 25 benachbarten Bereich ist ein Druckluftkanal 88 vorgesehen, der mit einem Druckluftanschluss 87 in Verbindung steht. In diesem Bereich muss sich das Material des Zuschnitts 3, 4, 5 von der Schneidwalze 39 lösen. Dies wird durch Druckluft unterstützt.

Wie Fig. 18 zeigt, stehen die einzelnen Saugkanäle 79 bei der Drehung der Schneidwalze 39 mit unterschiedlichen Steuernuten 83, 84 und dem Druckluftanschluss 87 in Verbindung. Steht ein Saugkanal 79 mit dem Druckluftanschluss 87 in Verbindung, so arbeitet er als Druckluftkanal 88 und die Saugöffnungen 65 arbeiten als Blasöffnungen 89. Wie die Figuren 15 und 16 zeigen, kann im Bereich der quer verlaufenden Kanten der Zu schnitte eine größere Anzahl von Saugkanälen 79 vorgesehen sein.

Das beim Zuschneiden abgeschnittene Material wird in die Auffangbehälter 24 nach unten fallen gelassen. Da im Bereich des Rands 76 keine Saugöffnungen 65 angeordnet sind, wird dieses weggeschnittene Material nicht auf der Schneidwalze 39 gehalten. Das Separatormaterial 63, 64 muss lediglich abgelängt und nicht an seinen Rändern zugeschnitten werden. Dadurch können die hier eingesetzten Schneidwalzen ggf. einen einfacheren Aufbau besitzen. Die Schneidwalze 41 für Kathodenmaterial 62 ist entsprechend der Schneidwalze 39, aber spiegelsymmetrisch aufgebaut. Auch die Schneidwalzen 40 und 42 für Separatormaterial 63, 64 können entsprechend aufgebaut sein.

Zum Anlegen des Unterdrucks ist die in Fig. 5 schematisch gezeichnete Unterdruckquelle 93 vorgesehen. Anstatt der über die Steuernuten 83 und 84 gesteuerten Verbindung mit der Unterdruckquelle 93 kann auch eine ventilgesteuerte Verbindung vorgesehen sein. Dies ist in Fig. 5 für die Transportwalzen 25, 26 und 27 mit den Ventilen 94 angedeutet. Die Ansteuerung der Saugöffnungen 65 von Saugöffnungen 60 in den Transportwalzen 25, 26 und 27 (Fig. 6) kann dabei je nach benötigten Steuerzeiten wahlweise ventilgesteuert oder nutgesteuert erfolgen.

Fig. 6 zeigt den Transport des Kathodenmaterials 62 und des Separatormaterials 64 exemplarisch. Entsprechend erfolgt der Transport von Anodenmaterial 61 und Separatormaterial 63 von der Schneidstation 73. Das Bandmaterial 62, 64 wird über die Zuführwalzen 15 zu den Schneidwalzen 41, 42 geführt und an diesen über Unterdruck, der an den Saugöffnungen 65 anliegt, gehalten. Die Schneidwalze 41 dreht sich in einer Drehrichtung 69 und die Schneidwalze 42 in einer Drehrichtung 70. Das Bandmaterial 62, 64 wird von den Kameras 56, 58 auf Markierungen hin untersucht. Von den Lasern 57 und 59 wird das Bandmaterial 62, 64 dann geschnitten, wobei das Separatormaterial 64 nur über einen geraden Schnitt abgelängt wird, während das Kathodenmaterial 62 mit gerundeten Kanten und mit einer Kontaktlasche 19 ausgeschnitten wird. Entstehender Schmutz wird über die Vertiefungen 77 und die Öffnung 78 abgesaugt.

Bei weiterer Drehung der Schneidwalzen 41 und 42 werden die Zuschnitte 4 und 5 an den Schneidwalzen 41 und 42 über den über die Steuernut 84 anliegenden Unterdruck fixiert. Bei der in Fig. 6 gezeigten Stellung sind die Zuschnitte 4 und 5 geschnitten und die Transportwalzen 26 und 27 sind direkt unterhalb der Schneidwalzen 41 und 42 angeordnet und zur Aufnahme der Zuschnitte 4 und 5 bereit. Die Transportwalzen 25, 26 und 27 besitzen jeweils einen Schlitz 35, 36, 37, dessen Funktion im Folgenden noch näher erläutert wird. Die Zuschnitte 3, 4, 5 werden auf den Transportwalzen 25, 26, 27 mit geringem Überstand in die Schlitze 35, 36, 37 angeordnet. Zum Übergeben der Zuschnitte 4 und 5 drehen sich die Transportwalzen 26 und 27 in Richtung der Pfeile 68 und 67 in Fig. 7. Im Berührbereich der Walzen ist an den Schneidwalzen 41 und 42 die Blasöffnung 89 angeordnet, so dass die Übergabe der Zuschnitte 4, 5 von den Schneidwalzen 41 und 42 an die Transportwalzen 26 und 27 durch Druckluft unterstützt erfolgen kann. Die Übergabe erfolgt durch Fixieren des zu übergebenden Abschnitts an den Transportwalzen 26, 27 und gleichzeitiges Lösen von den Schneidwalzen 41, 42 durch Unterbrechen des Unterdrucks oder zusätzlich von Druckluft unterstützt. Auf den Transportwalzen 26 und 27 werden die Zuschnitte 4 und 5 ebenfalls über Unterdruck fixiert. Die Übergabe erfolgt durch koordiniertes, gegenläufiges Drehen der Walzen 26, 27, 41, 42, so dass die Zuschnitte 4, 5 von den Schneidwalzen 41, 42 abgerollt und auf die Transportwalzen 26, 27 aufgerollt werden. Fig. 6 zeigt die walzenstellung zu Beginn der Übergabe und Fig. 7 bei der Übergabe.

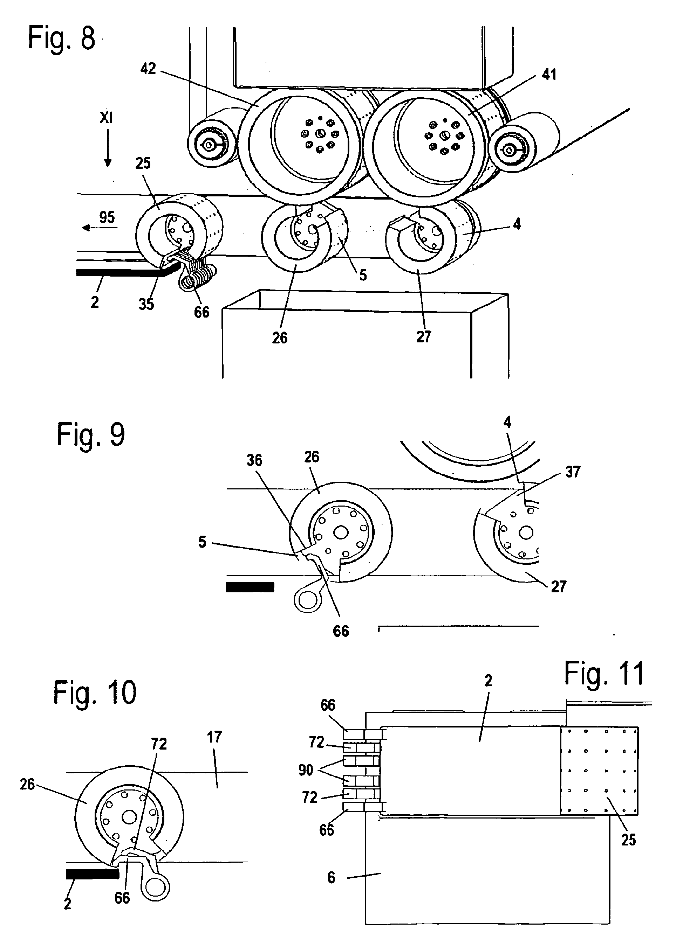

Fig. 8 zeigt die Stellung der Transportwalzen 26 und 27, nachdem sie einen Kathodenzuschnitt 4 und einen Separatorzuschnitt 5 aufgenommen haben. Die Transportwalze 25 ist leer und befindet sich am seitlichen Bereich des Stapels 2 im Bereich von Niederhaltern 66. Die Niederhalter 66 ragen dabei in den Schlitz 35 der Transportwalze 25. Die Niederhalter 66 stehen in den Bereich der Bewegungsbahn des Schlittens 17 über. Aufgrund der Schlitze 35, 36, 37 können die Transportwalzen 25, 26, 27 die Niederhalter 66 überfahren, ohne dass eine Bewegung senkrecht zur Ebene des Stapels 2 erfolgen muss.

Nachdem die Transportwalzen 26 und 27 einen Separatorzuschnitt 5 und einen Kathodenzuschnitt 4 aufgenommen haben, bewegt sich der Schlitten 17 in Richtung des Pfeils 95 in Fig. 8 in Richtung auf den Stapel 2. Die Transportwalze 26 wird im Bereich der Niederhalter 66 so gedreht, dass der Schlitz 36 nach unten zeigt und die Niederhalter 66 in den Schlitz 36 ragen. Die Niederhalter 66 sind dabei nach oben geschwenkt und vom Stapel 2 abgehoben. Der Rand des Separatorzuschnitts 5, der in den Bereich des Schlitzes 36 übersteht, kann bei dieser Bewegung unter dem Niederhalter 66 platziert werden. Sobald die Transportwalze 26 die Vorderkante des Stapels 2 erreicht hat, senkt sich der Niederhalter 66 ab und fixiert den Rand des Separatorzuschnitts 5 auf dem Stapel 2.

Fig. 11 zeigt die Anordnung der Niederhalter. Es sind auf jeder Querseite des Stapels 2 insgesamt sechs Niederhalter 66, 72, 90 angeordnet. Dabei ist sind sechs Niederhalter von der Transportwalze 25 in Fig. 11 verdeckt, Diese Niederhalter sind spiegelsymmetrisch zu den gezeigten Niederhaltern 66, 72, 90 angeordnet. Da die Fertigungsanlage 10 die Materialien sortenrein verarbeitet, sind insgesamt vier Niederhalter 66 für Separatormaterial 63, 64, vier Niederhalter 72 für Kathodenmaterial 62 und vier Niederhalter 90 für Anodenmaterial 61 vorgesehen. Wie Fig. 11 zeigt, kann der Stapel 2 direkt im Hüllmaterial 6 aufgeschichtet werden. Es kann jedoch auch vorgesehen sein, dass der vollständig aufgeschichtete Stapel 2 zum Hüllmaterial 6 transportiert wird.

Nachdem die Niederhalter 66 das Separatormaterial 5 am Rand des Stapels 2 fixiert haben, rollt die Transportwalze 26 über den Stapel 2 und legt dabei den Separatorzuschnitt 5 ab. Der Stapel 2 ist dabei über die Transportwalze 26 und die Niederhalter 66, die in Abrollrichtung 92 vor der Transportwalze 26 liegen, fixiert. Die Niederhalter 66, die sich im Bereich der Transportwalze 27 befinden, sind vom Stapel 2 abgehoben, damit der Kathodenzuschnitt 4 auf dem Stapel 2 unter die Niederhalter 66 abgelegt werden kann. Die Abrollrichtung 92 bezeichnet dabei die Richtung, in der sich die Transportwalzen 25, 26, 27 beim Abrollen auf dem Stapel 2 bewegen, also im Ausführungsbeispiel die Längsrichtung des Stapels 2.

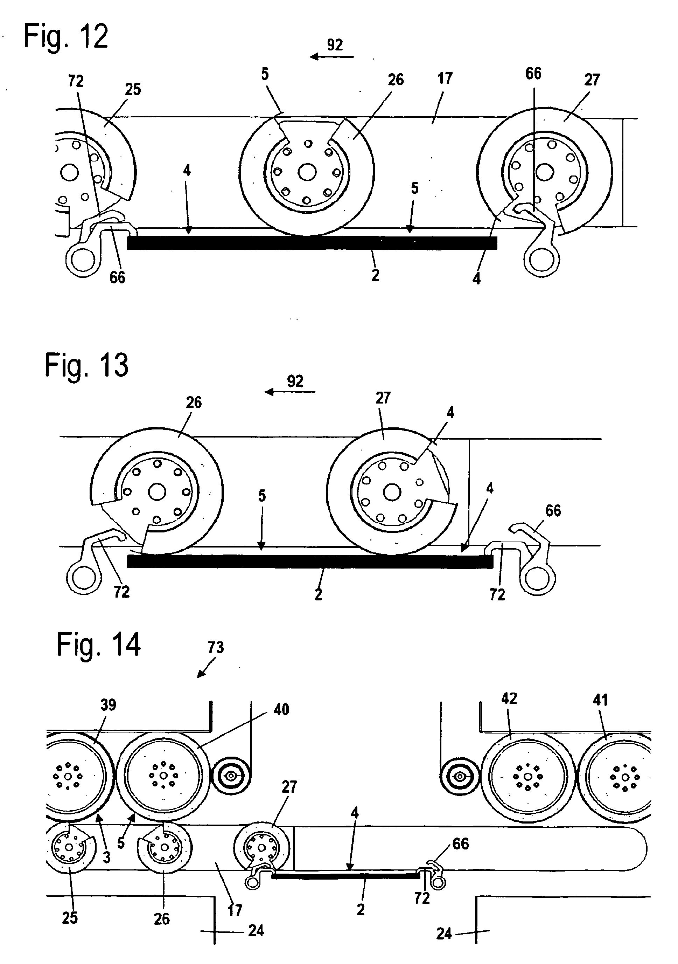

Wie Fig. 13 zeigt, wird der Kathodenzuschnitt 4 von Niederhaltern 72 fixiert, sobald der Rand des Kathodenzuschnitts 4 auf dem Stapel 2 angeordnet ist. Bei der in Fig. 13 gezeigten Stellung wird der Stapel 2 von beiden Transportwalzen 26 und 27 sowie von den in Abrollrichtung 92 hinter den Transportwalzen 26 und 27 liegenden Niederhaltern 72 fixiert.

Wie Fig. 14 zeigt, ist der Schlitten 17 im Bereich der ersten Schneidstation 73 angeordnet, sobald das Kathodenmaterial 4 vollständig von der Transportwalze 27 auf dem Stapel 2 abgerollt wurde. Der Abstand zwischen den Schneidstationen 73, 74 und dem Stapel 2 könnte jedoch auch größer gewählt sein. während der Übergabe des Kathodenmaterials 4 und des Separatormaterials 5 an die Transportwalzen 26 und 27, dem Transport zum Stapel 2 und dem Abrollen auf dem Stapel 2 wurden bereits ein Anodenzuschnitt 3 und ein Separatorzuschnitt 5 auf den Schneidwalzen 39 und 40 geschnitten. Diese Zuschnitte 3, 5 werden nun an die Transportwalzen 25 und 26 übergeben. Während der Übergabe werden bereits die nächsten Zuschnitte 4, 5 auf den Schneidwalze 41 und 42 geschnitten. Da während des Schneidens die Transportwalzen 25, 26, 27 nicht unter den Schneidwalzen 39, 40, 41, 42 stehen, können erkannte, markierte Materialfehler oder zugeschnittene Ränder in die Auffangbehälter 24 fallen gelassen werden.

Fig. 19 zeigt ein Ausführungsbeispiel einer Fertigungsanlage 100. Die Fertigungsanlage 100 entspricht in ihrem Aufbau im Wesentlichen der Fertigungsanlage 10 aus den Figuren 1 bis 18. Einander entsprechende Elemente sind mit gleichen Bezugszeichen bezeichnet.

Die Fertigungsanlage 100 besitzt für das Anodenmaterial 61 und das Kathodenmaterial 62 Schneideinrichtungen 101 und 102, bei denen das Bandmaterial nicht auf einer Schneidwalze geschnitten, sondern gestanzt wird. Die Walzen 105 und 106 dienen hier lediglich als Transportwalzen für den Transport des Bandmaterials zu den Schneideinrichtungen 101 und 102. Oberhalb der Walzen 105, 106 sind Kameras 107 und 108 zur Erkennung von markierten Materialfehler angeordnet. Das Stanzen kann dabei beispielsweise von unten erfolgen. Zwischen den Materialspulen 11, 13 und den Schneideinrichtungen 40, 101 der ersten Schneidstation 73 und zwischen den Materialspulen 12, 14 und den Schneideinrichtungen 42, 102 der zweiten Schneidstation 74 ist jeweils eine Trocknungseinrichtung 103, 104 vorgesehen, in der das Anodenmaterial 61, das Kathodenmaterial 62 und das Separatormaterial 63, 64 getrocknet werden, bevor den Schneidstationen 73 und 74 und der Transporteinrichtung 75 zugeführt und auf dem Stapel 2 abgelegt werden. In der Trocknungseinrichtung 103, 104 kann das Bandmaterial beispielsweise schlangenlinienförmig geführt sein, um einen geringen Bauraum bei ausreichend langer Verweilzeit in den Trocknungseinrichtungen 103, 104 zu erreichen. Die Ablage auf dem Stapel 2 erfolgt dabei ebenfalls über Abrollen. Vorteilhaft erfolgt auch der Transport von den Transportwalzen 105 und 106 zu den Schneideinrichtungen 101 und 102 und von dort zu der Transporteinrichtung 75 durch Abrollen. Dadurch ist ein positionsgenaues, faltenfreies und schnelles Erstellen des Stapels 2 möglich.

## Patentansprüche

1. Fertigungsanlage für eine Akkuflachzelle (1), bestehend aus einem Stapel (2) wechselnd aufeinander geschichteter Zuschnitte (3, 4) eines Anodenmaterials (61) und eines Kathodenmaterials (62), die durch zwischengelegte Zuschnitte (5) von Separatormaterial (63, 64) elektrisch voneinander getrennt sind, wobei die Fertigungsanlage (10, 100) Schneideinrichtungen (20, 21, 22, 23, 101, 102) für Anodenmaterial (61), Kathodenmaterial (62) und Separatormaterial (63, 64) besitzt,
**dadurch gekennzeichnet, dass** der Schneideinrichtung (20, 101) für Anodenmaterial (61) eine erste Schneideinrichtung (21) für Separatormaterial (63) zugeordnet ist, die mit dieser eine erste Schneidstation (73) bildet, und dass der Schneideinrichtung (22, 102) für Kathodenmaterial (62) eine zweite Schneideinrichtung (23) für Separatormaterial (64) zugeordnet ist, die mit dieser eine zweite Schneidstation (74) bildet.

2. Fertigungsanlage nach Anspruch 1,
**dadurch gekennzeichnet, dass** die Fertigungsanlage (10, 100) eine Transporteinrichtung (75) zum Transport von Anodenzuschnitten (3), Kathodenzuschnitten (4) und Separatorzuschnitten (5) besitzt.

3. Fertigungsanlage nach Anspruch 2,
**dadurch gekennzeichnet, dass** die Transporteinrichtung (75) eine Transportwalze (27) für Kathodenzuschnitte (4), eine Transportwalze (25) für Anodenzuschnitte (3) und eine Transportwalze (26) für Separatorzuschnitte (5) besitzt.

4. Fertigungsanlage nach Anspruch 3,
**dadurch gekennzeichnet, dass** die Transportwalzen (25, 26, 27) an einem gemeinsamen Schlitten (17) angeordnet sind, der sich zwischen den beiden Schneidstationen (73, 74) und dem Stapel (2) bewegt.

5. Fertigungsanlage nach einem der Ansprüche 2 bis 4,
**dadurch gekennzeichnet, dass** die Transporteinrichtung (75) die beiden Schneidstationen (73, 74) abwechselnd anfährt, wobei der Stapel (2) zwischen den beiden Schneidstationen (73, 74) angeordnet ist und die Transporteinrichtung (75) nach jeder Aufnahme von Zuschnitten (3, 4, 5) an einer Schneidstation (73, 74) die aufgenommenen Zuschnitte (3, 4, 5) auf dem Stapel (2) ablegt.

6. Fertigungsanlage nach einem der Ansprüche 1 bis 5,
**dadurch gekennzeichnet, dass** mindestens eine Schneideinrichtung (20, 21, 22, 23) das über eine Schneidwalze (39, 40, 41, 42) geführte Bandmaterial auf der Schneidwalze (39, 40, 41, 42) schneidet.

7. Fertigungsanlage nach Anspruch 6,
**dadurch gekennzeichnet, dass** die Schneideinrichtung (20, 21, 22, 23) einen Laser (57, 59) umfasst.

8. Fertigungsanlage nach einem der Ansprüche 1 bis 7,
**dadurch gekennzeichnet, dass** mindestens eine Schneideinrichtung (101, 102) eine Stanzvorrichtung umfasst, die den Zuschnitt (3, 4) aus dem Bandmaterial ausstanzt.

9. Fertigungsanlage nach einem der Ansprüche 1 bis 8,
**dadurch gekennzeichnet, dass** der Schneideinrichtung (20, 21, 22, 23, 101, 102) eine Erkennungseinrichtung zugeordnet ist, die markierte Materialfehler erkennt, wobei die Schneideinrichtung (20, 21, 22, 23, 101, 102) so gesteuert ist, dass Zuschnitte (3, 4, 5) mit erkannten Materialfehlern nicht auf dem Stapel (2) abgelegt werden.

10. Fertigungsanlage nach einem der Ansprüche 1 bis 9,
**dadurch gekennzeichnet, dass** vor mindestens einer Schneideinrichtung (21, 23, 101, 102) mindestens eine Trocknungseinrichtung (103, 104) angeordnet ist.

11. Fertigungsanlage nach einem der Ansprüche 1 bis 10,
**dadurch gekennzeichnet, dass** die Fertigungsanlage (10, 100) Bereiche (29, 30, 31) unterschiedlicher Trockenheit aufweist, wobei der Stapel (2) in dem Bereich (29) mit der höchsten Trockenheit angeordnet ist.

12. Fertigungsanlage nach Anspruch 10 oder 11,
**dadurch gekennzeichnet, dass** die Schneideinrichtung (20, 21, 22, 23, 101, 102) in einem zweiten Bereich mit mittlerer Trockenheit angeordnet ist.

13. Fertigungsanlage nach Anspruch 11 oder 12,
**dadurch gekennzeichnet, dass** die Zuschnitte (3, 4, 5) aus Bandmaterial geschnitten werden, und dass die Materialspulen (11, 12, 13, 14) in einem dritten Bereich mit geringer Trockenheit angeordnet sind.

14. Verfahren zur Herstellung einer Akkuflachzelle (1), bestehend aus einem Stapel (2) wechselnd aufeinander geschichteter Zuschnitte (3, 4) eines Anodenmaterials (61) und eines Kathodenmaterials (62), die durch zwischengelegte Zuschnitte (5) eines Separatormaterials (63, 64) elektrisch voneinander getrennt sind, wobei die Zuschnitte aus Bandmaterial ausgeschnitten werden,
**dadurch gekennzeichnet, dass** jeder Anodenzuschnitt (3) gleichzeitig mit einem Separatorzuschnitt (5) ausgeschnitten wird, und dass jeder Kathodenzuschnitt (4) gleichzeitig mit einem Separatorzuschnitt (5) ausgeschnitten wird.

15. Verfahren nach Anspruch 14,
**dadurch gekennzeichnet, dass** der Anodenzuschnitt (3) zusammen mit dem Separatorzuschnitt (5) zu dem Stapel (2) transportiert wird, und dass der Kathodenzuschnitt (4) zusammen mit dem Separatorzuschnitt (5) zu dem Stapel (2) transportiert wird.

16. Verfahren nach Anspruch 14 oder 15,
**dadurch gekennzeichnet, dass** der Transport von Anodenzuschnitt (3) und Separatorzuschnitt (5) gleichzeitig mit dem Zuschnitt von Kathodenzuschnitt (4) und Separatorzuschnitt (5) erfolgt, und dass der Transport von Kathodenzuschnitt (4) und Separatorzuschnitt (5) gleichzeitig mit dem Zuschnitt von Anodenzuschnitt (3) und Separatorzuschnitt (5) erfolgt.

17. Verfahren nach einem der Ansprüche 14 bis 16,
**dadurch gekennzeichnet, dass** die Ablage von Anodenzuschnitt (3) und Separatorzuschnitt (5) auf dem Stapel (2) gleichzeitig mit dem Zuschnitt von Kathodenzuschnitt (4) und Separatorzuschnitt (5) erfolgt, und dass die Ablage von Kathodenzuschnitt (4) und Separatorzuschnitt (5) gleichzeitig mit dem Zuschnitt von Anodenzuschnitt (3) und Separatorzuschnitt (5) erfolgt.

## Claims

1. Production assembly for a flat battery cell (1), consisting of a stack (2) of sections (3, 4) of an anode material (61) and a cathode material (62) layered one on top of the other in an alternating manner which are electrically separated from each other by intermediately placed sections (5) of separator material (63, 64), wherein the production assembly (10, 100) has cutting means (20, 21, 22, 23, 101, 102) for anode material (61), cathode material (62) and separator material (63, 64),
**characterised in that** a first cutting means (21) for separator material (63) is assigned to the cutting means (20, 101) for anode material (61) and together therewith forms a first cutting station (73), and **in that** a second cutting means (23) for separator material (64) is assigned to the cutting means (22, 102) for cathode material (62) and together therewith forms a second cutting station (74).

2. Production assembly according to claim 1,
**characterised in that** the production assembly (10, 100) has a transport means (75) for transporting anode sections (3), cathode sections (4) and separator sections (5).

3. Production assembly according to claim 2,
**characterised in that** the transport means (75) has a transport roller (27) for cathode sections (4), a transport roller (25) for anode sections (3) and a transport roller (26) for separator sections (5).

4. Production assembly according to claim 3,
**characterised in that** the transport rollers (25, 26, 27) are arranged on a common carriage (17) which moves between the two cutting stations (73, 74) and the stack (2).

5. Production assembly according to one of the claims 2 to 4,
**characterised in that** the transport means (75) moves in an alternating manner to the two cutting stations (73, 74), wherein the stack (2) is arranged between the two cutting stations (73, 74), and the transport means (75), after each time it receives sections (3, 4, 5) at a cutting station (73, 74), places said received sections (3, 4, 5) on the stack (2).

6. Production assembly according to one of the claims 1 to 5,
**characterised in that** at least one cutting means (20, 21, 22, 23) cuts the band material fed via a cutting roller (39, 40, 41, 42) on said cutting roller (39, 40, 41, 42).

7. Production assembly according to claim 6,
**characterised in that** the cutting means (20, 21, 22, 23) comprises a laser (57, 59).

8. Production assembly according to one of the claims 1 to 7,
**characterised in that** at least one cutting means (101, 102) comprises a punching device which punches the section (3, 4) out of the band material.

9. Production assembly according to one of the claims 1 to 8,
**characterised in that** a detection means is assigned to the cutting means (20, 21, 22, 23, 101, 102), which detects marked material defects, wherein the cutting means (20, 21, 22, 23, 101, 102) is controlled so that sections (3, 4, 5) with detected material defects are not placed on the stack (2).

10. Production assembly according to one of the claims 1 to 9,
**characterised in that** at least one drying means (103, 104) is arranged before at least one cutting means (21, 23, 101, 102).

11. Production assembly according to one of the claims 1 to 10,
**characterised in that** the production assembly (10, 100) comprises regions (29, 30, 31) of differing dryness, wherein the stack (2) is arranged in the region (29) with the highest dryness.

12. Production assembly according to claim 10 or 11,
**characterised in that** the cutting means (20, 21, 22, 23, 101, 102) is arranged in a second region with medium dryness.

13. Production assembly according to claim 11 or 12,
**characterised in that** the sections (3, 4, 5) are cut from band material and the material reels (11, 12, 13, 14) are arranged in a third region with low dryness.

14. Method for producing a flat battery cell (1) consisting of a stack (2) of sections (3, 4) of an anode material (61) and a cathode material (62) layered in an alternating manner one on top of the other and are electrically separated from each other by intermediately laid sections (5) of a separator material (63, 64), wherein the sections are cut out of band material,
**characterised in that** each anode section (3) is simultaneously cut out with a separator section (5) and **in that** each cathode section (4) is simultaneously cut out with a separator section (5).

15. Method according to claim 14,
**characterised in that** the anode section (3) is transported together with the separator section (5) to the stack (2) and the cathode section (4) is transported together with the separator section (5) to the stack (2).

16. Method according to claim 14 or 15,
**characterised in that** the transport of the anode section (3) and the separator section (5) takes place simultaneously with the cutting of the cathode section (4) and the separator section (5) and the transport of the cathode section (4) and the separator section (5) takes place simultaneously with the cutting of the anode section (3) and the separator section (5).

17. Method according to one of the claims 14 to 16,
**characterised in that** the placing of the anode section (3) and the separator section (5) on the stack (2) takes place simultaneously with the cutting of the cathode section (4) and the separator section (5), and the placing of the cathode section (4) and the separator section (5) takes place simultaneously with the cutting of the anode section (3) and the separator section (5).

## Revendications

1. Installation de fabrication pour une cellule plate de batterie (1) composée d'un empilement (2) de flans (3, 4) d'un matériau d'anode (61) et d'un matériau de cathode (62) qui sont superposés en alternance et qui sont séparés électriquement les uns des autres par des flans (5) de matériau de séparateur (63, 64) placés entre eux, étant précisé que l'installation de fabrication (10, 100) a des dispositifs de coupe (20, 21, 22, 23, 101, 102) pour le matériau d'anode (61), le matériau de cathode (62) et le matériau de séparateur (63, 64),
**caractérisée en ce qu'**il est prévu, associé au dispositif de coupe (20, 101) pour le matériau d'anode (61), un premier dispositif de coupe (21) pour le matériau de séparateur (63), qui forme avec le dispositif de coupe (20, 101) une première station de coupe (73), et **en ce qu'**il est prévu, associé au dispositif de coupe (22, 102) pour le matériau de cathode (62), un second dispositif de coupe (23) pour le matériau de séparateur (64), qui forme avec le dispositif de coupe (22, 102) une seconde station de coupe (74).

2. Installation de fabrication selon la revendication 1,
**caractérisée en ce que** l'installation de fabrication (10, 100) a un dispositif de transport (75) pour transporter des flans d'anode (3), des flans de cathode (4) et des flans de séparateur (5).

3. Installation de fabrication selon la revendication 2,
**caractérisée en ce que** le dispositif de transport (75) a un cylindre de transport (27) pour les flans de cathode (4), un cylindre de transport (25) pour les flans d'anode (3) et un cylindre de transport (26) pour les flans de séparateur (5).

4. Installation de fabrication selon la revendication 3,
**caractérisée en ce que** les cylindres de transport (25, 26, 27) sont disposés sur un chariot commun (17) qui se déplace entre les deux stations de coupe (73, 74) et l'empilement (2).

5. Installation de fabrication selon l'une des revendications 2 à 4,
**caractérisée en ce que** le dispositif de transport (75) approche en alternance des deux stations de coupe (73, 74), étant précisé que l'empilement (2) est disposé entre les deux stations de coupe (73, 74) et que le dispositif de transport (75), à chaque fois qu'il a pris des flans (3, 4, 5) sur une station de coupe (73, 74), dépose sur l'empilement (2) les flans (3, 4, 5) pris.

6. Installation de fabrication selon l'une des revendications 1 à 5,
**caractérisée en ce qu'**au moins un dispositif de coupe (20, 21, 22, 23) coupe sur le cylindre de coupe (39, 40, 41, 42) le matériau en bande amené sur celui-ci.

7. Installation de fabrication selon la revendication 6,
**caractérisée en ce que** le dispositif de coupe (20, 21, 22, 23) comprend un laser (57, 59).

8. Installation de fabrication selon l'une des revendications 1 à 7,
**caractérisée en ce qu'**au moins un dispositif de coupe (101, 102) comprend un dispositif de découpage qui découpe le flan (3, 4) dans le matériau en bande.

9. Installation de fabrication selon l'une des revendications 1 à 8,
**caractérisée en ce qu'**il est prévu, associé au dispositif de coupe (20, 21, 22, 23, 101, 102), un dispositif de détection qui détecte les défauts de matériau marqués, étant précisé que le dispositif de coupe (20, 21, 22, 23, 101, 102) est commandé pour que les flans (3, 4, 5) avec des défauts de matériau détectés ne soient pas déposés sur l'empilement (2).

10. Installation de fabrication selon l'une des revendications 1 à 9,
**caractérisée en ce qu'**au moins un dispositif de séchage (103, 104) est disposé avant au moins un dispositif de coupe (21, 23, 101, 102).

11. Installation de fabrication selon l'une des revendications 1 à 10,
**caractérisée en ce que** l'installation de fabrication (10, 100) présente des zones (29, 30, 31) de sécheresses différentes, étant précisé que l'empilement (2) est disposé dans la zone (29) avec la plus grande sécheresse.

12. Installation de fabrication selon la revendication 10 ou 11,
**caractérisée en ce que** le dispositif de coupe (20, 21, 22, 23, 101, 102) est disposé dans une deuxième zone avec une sécheresse moyenne.

13. Installation de fabrication selon la revendication 11 ou 12,
**caractérisée en ce que** les flans (3, 4, 5) sont coupés dans le matériau en bande et **en ce que** les bobines de matériau (11, 12, 13, 14) sont disposées dans une troisième zone avec une sécheresse faible.

14. Procédé pour fabriquer une cellule plate de batterie (1) composée d'un empilement (2) de flans (3, 4) d'un matériau d'anode (61) et d'un matériau de cathode (62) qui sont superposés en alternance et qui sont séparés électriquement les uns des autres par des flans (5) de matériau de séparateur (63, 64) placés entre eux, étant précisé que les flans sont découpés dans un matériau en bande,
**caractérisé en ce que** chaque flan d'anode (3) est découpé en même temps qu'un flan de séparateur (5), et **en ce que** chaque flan de cathode (4) est découpé en même temps qu'un flan de séparateur (5).

15. Procédé selon la revendication 14,
**caractérisé en ce que** le flan d'anode (3) est transporté avec le flan de séparateur (5) jusqu'à l'empilement (2), et **en ce que** le flan de cathode (4) est transporté avec le flan de séparateur (5) jusqu'à l'empilement (2).

16. Procédé selon la revendication 14 ou 15,
**caractérisé en ce que** le transport du flan d'anode (3) et du flan de séparateur (5) se fait en même temps que le découpage du flan de cathode (4) et du flan de séparateur (5), et **en ce que** le transport du flan de cathode (4) et du flan de séparateur (5) se fait en même temps que le découpage du flan d'anode (3) et du flan de séparateur (5).

17. Procédé selon l'une des revendications 14 à 16,
**caractérisé en ce que** le dépôt du flan d'anode (3) et du flan de séparateur (5) sur l'empilement (2) se fait en même temps que le découpage du flan de cathode (4) et du flan de séparateur (5), et **en ce que** le dépôt du flan de cathode (4) et du flan de séparateur (5) se fait en même temps que le découpage du flan d'anode (3) et du flan de séparateur (5).
